# EUROPÄISCHE PATENTSCHRIFT

(11) **EP 1 239 300 B1**
(45) Veröffentlichungstag und Bekanntmachung des Hinweises auf die Patenterteilung: **27.05.2009**
(21) Anmeldenummer: 02004867.4
(22) Anmeldetag: 04.03.2002
(51) Int. Cl.: G01S 17/42, G01S 17/87

(54) **Vorrichtung zur Bestimmung eines Abstandprofils**
Device for determination of a distance profile
Dispositif pour déterminer un profile de distance

(30) Priorität: 05.03.2001 DE 10110420
(43) Veröffentlichungstag der Anmeldung: 11.09.2002
(73) Patentinhaber: SICK AG, 79183 Waldkirch (DE)
(72) Erfinder: Hipp, Johann, 22391 Hamburg (DE)
(74) Vertreter: Manitz, Finsterwald & Partner GbR

(56) Entgegenhaltungen:
- EP-A- 0 361 188
- EP-A- 0 396 865
- DE-A- 4 124 192
- US-A- 5 546 188
- MCMANAMON P F ET AL: "OPTICAL PHASED ARRAY TECHNOLOGY" PROCEEDINGS OF THE IEEE, IEEE. NEW YORK, US, Bd. 84, Nr. 2, 1. Februar 1996 (1996-02-01), Seiten 268-298, XP000555865 ISSN: 0018-9219

## Beschreibung

Die Erfindung betrifft eine Vorrichtung zur Bestimmung eines Abstandsprofils mit einem Lichtsender zur Aussendung pulsförmiger Lichtsignale in Richtung eines Überwachungsraums, einem Lichtempfänger zum Empfang von aus dem Überwachungsraum reflektierten/remittierten Lichtsignalen und einer Auswerteeinheit zur Ermittlung von Abstandswerten in Abhängigkeit von der Lichtlaufzeit zwischen Aussendung und Empfang der Lichtsignale.

Vorrichtungen der genannten Art sind grundsätzlich in zwei unterschiedlichen Ausführungsformen bekannt. Bei einer ersten Ausführungsform wird von der Vorrichtung ein relativ zur Vorrichtung unbeweglicher Lichtstrahl in eine konstante Richtung ausgesandt, so daß der Abstand von Objekten zur Vorrichtung ermittelt werden kann, die sich entlang der Ausbreitungsrichtung des Lichtstrahls befinden. Bei einer zweiten Ausführungsform wird der Lichtstrahl über einen bestimmten Winkelbereich, beispielsweise 180° oder 360°, abgelenkt, so daß der Lichtstrahl letztlich innerhalb einer sich benachbart zur Vorrichtung erstreckenden Ebene verschwenkt wird. Eine solche Vorrichtung ist beispielsweise im deutschen Patent DE 43 40 756 C2 offenbart. Mit dieser Vorrichtung kann dementsprechend der Abstand von Objekten bestimmt werden, die sich an einem beliebigen Ort innerhalb der vom Lichtstrahl abgetasteten Ebene befinden. Ebenso sind beispielsweise genaue Positionsbestimmungen von Objekten oder Konturvermessungen möglich, wenn zusätzlich zu dem genannten Abstandswert auch noch der zugehörige Ablenkwinkel des Lichtstrahls bestimmt wird, da aus der Abstands- und Winkelinformation auf die Position des Reflexions-/Remissionsortes des Lichtstrahls rückgeschlossen werden kann.

Der Nachteil der beschriebenen Vorrichtungen besteht darin, daß jeweils nur ein beschränkter Bereich überwacht werden kann. Bei der erstgenannten Ausführungsform (unbewegter Lichtstrahl) können tatsächlich nur Objekte detektiert werden, die sich entlang einer geraden, relativ zur Vorrichtung statischen Linie befinden. Bei der zweiten Ausführungsform (verschwenkter Lichtstrahl bzw. "Scanner") können nur Objekte innerhalb der Ebene, in der der Lichtstrahl verschwenkt wird, detektiert werden, jedoch keine Objekte, die sich außerhalb dieser Ebene befinden. Bei Anordnung mehrerer Scanner übereinander mit mehreren übereinanderliegenden Schwenkebenen sind wiederum nur unvollständige, lückenhafte Bilder erfaßbar, da lediglich einzelne Zeilen eines Bildes, nicht jedoch die Lücken zwischen den Zeilen abgetastet werden können.

DE-A-195-16-324 offenbart eine Vorrichtung nach dem Oberbegriff des Anspruchs 1.

Eine Aufgabe der Erfindung besteht folglich darin, Vorrichtungen der eingangs genannten Art derart zu verbessern, daß größere Überwachungsbereiche erfaßbar sind, wobei dieses Ziel insbesondere mit vertretbarem wirtschaftlichen Aufwand erreichbar sein soll.

Die Aufgabe wird dadurch gelöst, daß der Lichtsender zur gleichzeitigen Aussendung mehrerer Lichtsignale in Richtung mehrerer, im Überwachungsraum gelegener, voneinander beabstandeter Reflexions/Remissionspunkte ausgelegt ist, und daß der Lichtempfänger mehrere Photodioden zum Empfang von von den Reflexions-/Remissionspunkten reflektierten/remittierten Lichtsignalen umfaßt.

Erfindungsgemäß wirkt also nicht mehr nur ein Sender mit einem Empfänger zusammen, sondern es werden mehrere Lichtsignale gleichzeitig in unterschiedliche Richtungen ausgesandt, wobei jedem Lichtsignal eine eigene Photodiode zum Empfang des reflektierten/remittierten Lichtsignals zugeordnet ist. Hierdurch lassen sich eine Reihe von Vorteilen realisieren:
- Durch die gleichzeitige Aussendung mehrerer Lichtstrahlen in unterschiedliche Richtungen läßt sich ein größerer Bereich, nämlich der von der Gesamtheit der gleichzeitig ausgesandten Lichtstrahlen erfaßte Bereich, überwachen, als bei Aussendung eines einzelnen Lichtstrahls, der lediglich die Überwachung einer sich entlang dieses einen Lichtstrahls erstreckenden Linie erlaubt.
- Dadurch, daß die Lichtstrahlen gleichzeitig ausgesandt werden, ergibt sich eine Zeitersparnis gegenüber einer nacheinander erfolgenden Aussendung von Lichtstrahlen, wie sie bei Vorrichtungen gemäß Stand der Technik üblich ist.
- Da der Zeitpunkt für die Aussendung aller Lichtstrahlen der gleiche ist und jedem Lichtstrahl eine eigene Photodiode zugeordnet wird, lassen sich die jedem Lichtstrahl zugeordneten Abstandswerte gleichzeitig ermitteln, da die hierfür erforderlichen jeweiligen Zeitdauern zwischen Aussendung und Empfang der Lichtstrahlen für alle Lichtstrahlen im wesentlichen gleichzeitig zur Verfügung stehen.

Bevorzugt ist es, wenn die mehreren ausgesandten Lichtsignale Bestandteile eines fächerförmigen Lichtbündels sind. In diesem Fall genügt es, eine einzige Lichtquelle vorzusehen, die zeitlich aufeinanderfolgende pulsförmige Lichtsignale abgibt, welche dann aufgefächert werden, so daß ein einzelner Lichtimpuls der Lichtquelle letztlich in mehrere, gleichzeitig ausgesandte Lichtsignale zerlegt wird. Ebenso können aber auch mehrere Lichtquellen für die Erzeugung des Lichtbündels eingesetzt werden.

Das fächerförmige Lichtbündel kann sich bevorzugt innerhalb einer Ebene erstrecken. Alternativ ist es jedoch auch möglich, daß die einzelnen Lichtstrahlen des Lichtbündels in unterschiedlichen Ebenen verlaufen.

Der erfindungsgemäß vorgesehene Lichtsender ist bevorzugt zur Projektion eines insbesondere geraden Lichtstriches in den Überwachungsraum ausgelegt. Dieser Lichtstrich, der sich bevorzugt senkrecht zur Projektionsrichtung erstreckt, kann beispielsweise durch das bereits erläuterte fächerförmige Lichtbündel erzeugt werden, welches sich im Falle eines geraden Lichtstriches innerhalb einer Ebene erstrecken muß.

Wenn ein solcher Lichtstrich derart ausgesandt wird, daß er sich relativ zur Vorrichtung nicht bewegt, kann letztlich im wesentlichen die gleiche Funktion realisiert werden, wie bei aus dem Stand der Technik bekannten Scannern, ohne daß in der erfindungsgemäßen Vorrichtung bewegliche Teile zur veränderlichen Ablenkung eines Lichtstrahls vorgesehen werden müßten. Die Länge des Lichtstriches bzw. die Anzahl der diesen Lichtstrich bildenden Lichtstrahlen definieren nämlich einen Winkelbereich, welcher dem Ablenkwinkelbereich herkömmlicher Scanner entsprechen kann. Dieser Winkelbereich kann dann erfindungsgemäß unter Erzielung der eingangs genannten Vorteile überwacht werden, ohne daß in der Vorrichtung eine Lichtablenkeinheit vorgesehen werden müßte und ohne daß es nötig wäre, einzelne Lichtstrahlen zeitlich nacheinander auszusenden. Vielmehr kann mit der Aussendung eines einzigen fächerförmigen Lichtbündels der gesamte Winkelbereich dieses Lichtbündels erfaßt und überwacht werden.

Der Lichtsender wird bevorzugt als Laserdiode ausgebildet. Zur Erreichung bzw. Erhöhung der erforderlichen Leistung können auch mehrere Laserdioden gemeinsam den Lichtsender bilden.

Der Lichtempfänger ist bevorzugt als Photodiodenzeile ausgebildet, wobei sich die Photodioden entlang einer geraden Linie erstrecken. Diese Linie befindet sich beispielsweise innerhalb der Ebene, innerhalb derer sich das fächerförmige Lichtbündel erstreckt.

Besonders bevorzugt ist es, wenn eine lichtsenderseitige Lichtablenkvorrichtung vorgesehen wird. Durch eine solche Lichtablenkvorrichtung wird es möglich, beispielsweise ein fächerförmiges Lichtbündel senkrecht zu derjenigen Ebene abzulenken, in der sich das fächerförmige Lichtbündel erstreckt. Es wird dementsprechend ein in Ablenkrichtung "wandernder" Lichtstrich erzeugt, der es nun im Vergleich zu aus dem Stand der Technik bekannten Scannern ermöglicht, nicht nur eine Ebene, sondern einen Raum zu überwachen. In diesem Fall ist es von Vorteil, wenn der Lichtempfänger als zweidimensionales Photodiodenarray ausgebildet ist.

Bei dieser Ausführungsform mit wanderndem Lichtstrich überstreicht dann beispielsweise ein sich vertikal erstreckender, gerader Lichtstrich periodisch in horizontaler Richtung eine Fläche, so daß der gesamte, zwischen dieser Fläche und der Vorrichtung liegende Raum überwacht werden kann. Der Lichtstrich wird dabei unter sich zunehmend verändernden Winkeln ausgesandt, wobei für jede Winkelstellung die Abstände derjenigen Punkte zur Vorrichtung berechnet werden, von denen aus der Lichtstrich zurück zur Vorrichtung reflektiert/remittiert wird. Bei ausreichend schneller Ablenkgeschwindigkeit und ausreichend kurzer Pulsdauer der ausgesandten Lichtstriche kann auf diese Weise eine kontinuierliche Überwachung des genannten Raums sichergestellt werden.

Weitere bevorzugte Ausführungsformen der Erfindung sind in den Unteransprüchen beschrieben.

Die Erfindung wird nachfolgend an Hand eines Ausführungsbeispiels unter Bezugnahme auf die Figuren erläutert; in diesen zeigen:
- Figur 1: eine schematisierte Seitenansicht einer erfindungsgemäßen Anordnung,
- Figur 2: eine Draufsicht auf die Anordnung gemäß Figur 1, und
- Figur 3: ein Blockschaltbild eines erfindungsgemäß zum Einsatz gelangenden Lichtempfängers einschließlich Auswerteeinheit.

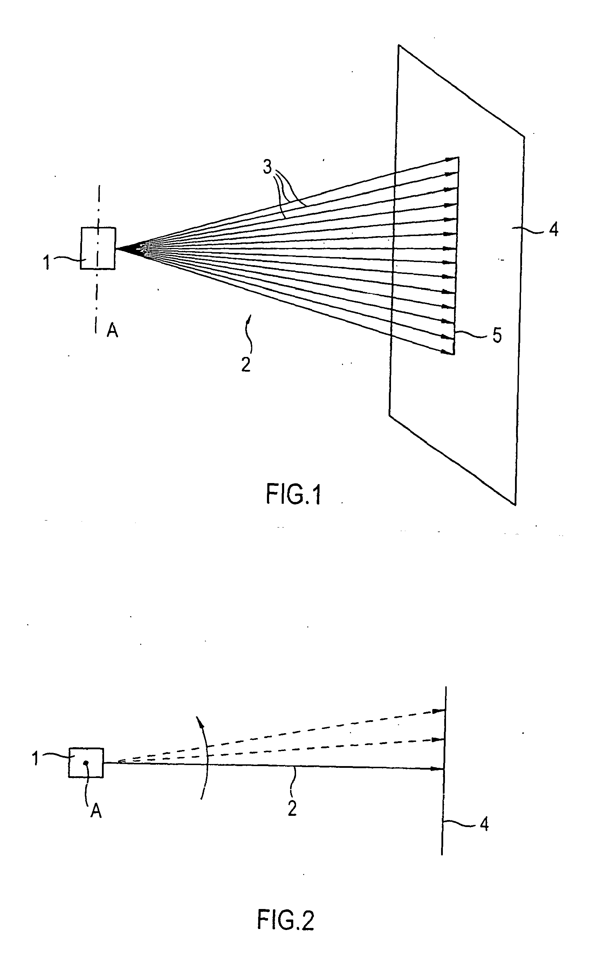

Figur 1 zeigt eine erfindungsgemäße Vorrichtung 1, welche ein fächerförmiges, sich innerhalb einer Ebene erstreckendes Bündel 2 von Lichtstrahlen 3 aussendet. Die Erzeugung des Lichtbündels 2 kann beispielsweise mittels eines oder mehrerer Laser erfolgen. Bei der Verwendung von beispielsweise vier Lasern kann jedem Laser eine Sendelinse vorgeschaltet sein, wobei von jeder Linse letztlich acht Lichtstrahlen 3 des Lichtbündels 2 ausgehen können, so daß insgesamt ein aus 24 Lichtstrahlen 3 bestehendes Lichtbündel 2 ausgesandt wird. Die Anzahl der verwendeten Laser ist jedoch in beliebiger Weise an den jeweiligen Anwendungsfall anpaßbar; ebenfalls die Anzahl der von einem Laser erzeugten Lichtstrahlen 3.

Das Lichtbündel 2 wird in Richtung einer Fläche 4 ausgesandt, die sich im dargestellten Ausführungsbeispiel im wesentlichen senkrecht zur Ausbreitungsrichtung des Lichtbündels 2 erstreckt. Die Ebene kann sich jedoch in anderen Anwendungsfällen auch mit beliebiger Neigung zur Ausbreitungsrichtung des Lichtbündels 2erstrecken. Auf der Fläche 4 wird durch das Lichtbündel 2 ein Lichtstrich 5 erzeugt. Von diesem Lichtstrich 5 aus wird das von der Vorrichtung 1 ausgesandte Licht zurück zur Vorrichtung 1 reflektiert/remittiert, und das reflektierte/remittierte Licht wird in der Vorrichtung 1 empfangen. Aus der Zeit zwischen Aussendung eines Lichtstrahls 3 und Empfangen des diesem Lichtstrahl 3 zugeordneten reflektierten/remittierten Lichts kann in der Vorrichtung 1 der Abstand zwischen der Vorrichtung 1 und dem dem jeweiligen Lichtstrahl 3 zugeordneten Reflexions-/Remmissionspunkt des auf der Fläche 4 abgebildeten Lichtstrichs 5 berechnet werden.

Wenn in den Raum zwischen Vorrichtung 1 und Fläche 4 ein Gegenstand eingebracht wird, erfolgt die Reflexion/Remission im Bereich dieses Gegenstands nicht mehr auf der Fläche 4 sondern an denjenigen Punkten, an denen die Lichtstrahlen 3 auf den Gegenstand auftreffen. Dementsprechend kann mit der Anordnung gemäß Figur 1 dann der Abstand dieses Gegenstands von der Vorrichtung 1 bzw. seine Kontur aus den ermittelten Abstandsignalen berechnet werden.

Das Lichtbündel 2 wird periodisch um eine Achse A verschwenkt, was insbesondere auch aus Figur 2 ersichtlich ist. Dieses Verschwenken bewirkt, daß mittels der Anordnung gemäß den Figuren 1 und 2 nicht nur Gegenstände detektiert werden können, die sich im Bereich des in Figur 1 dargestellten Lichtbündels 2 befinden. Vielmehr können all diejenigen Gegenstände erfaßt werden, die im gesamten Schwenkbereich des Lichtbündels 2 angeordnet sind. Der Schwenkbereich kann beispielsweise 180°, ohne weiteres aber auch 360° betragen. Bei einer Schwenkbewegung um 360° kann der gesamte, die Vorrichtung 1 umgebende Raum überwacht werden.

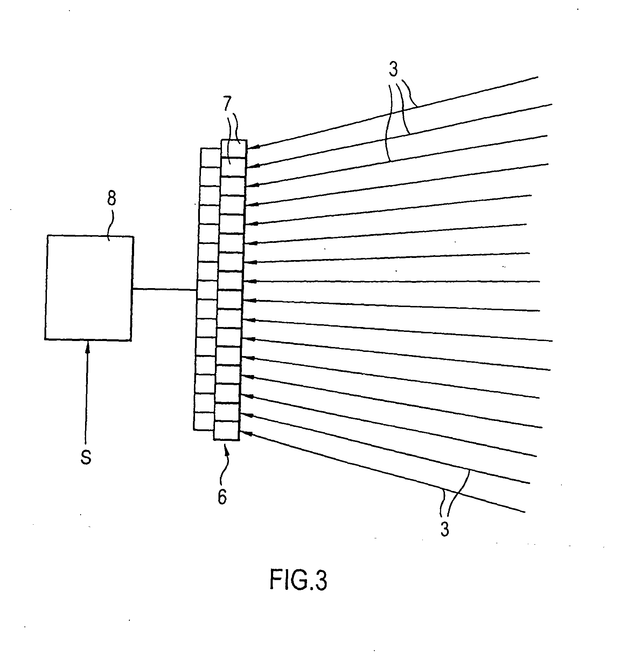

Figur 3 zeigt einen in der Vorrichtung 1 angeordneten Lichtempfänger 6, welcher aus einer Zeile von mehreren, nebeneinander angeordneten Fotodioden 7 besteht. Jede Fotodiode 7 ist dabei einem reflektierten/remittierten Lichtstrahl 3 zugeordnet, so daß jede Fotodiode 7 zum Zeitpunkt des Empfangs des ihr zugeordneten reflektierten/remittierten Lichtstrahls 3 ein Signal abgeben kann, welches einer Auswerteeinheit 8 zugeführt wird. Der Auswerteeinheit 8 wird weiterhin auch noch ein Signal S zugeführt, welches dem Zeitpunkt der gleichzeitigen Aussendung aller Lichtstrahlen 3 entspricht. Aus diesem Signal S und den von den Fotodioden 7 zur Verfügung gestellten Signalen kann in der Auswerteeinheit 8 die Lichtlaufzeit jedes Lichtstrahls 3 berechnet werden. Aus der Lichtlaufzeit kann dann unter Berücksichtigung der Lichtgeschwindigkeit auf den Abstand des dem jeweiligen Lichtstrahl 3 zugeordneten Reflexions/Remissionspunktes von der Vorrichtung 1 rückgeschlossen werden.

Im Rahmen der Erfindung müssen nicht notwendigerweise alle Lichtstrahlen 3 des Lichtbündels 2 gleichzeitig ausgesandt werden. Vielmehr ist es auch möglich, zeitversetzt einzelne Einheiten von jeweils einigen Lichtstrahlen 3 auszusenden, wobei die einzelnen Lichtstrahlen 3 dieser Einheiten jeweils gleichzeitig ausgesandt werden. Die Auswerteeinheit 8 muß dann mit Signalen beaufschlagt werden, die den Aussendezeitpunkten der einzelnen Einheiten von Lichtbündeln 3 entsprechen, um letztlich die korrekten Abstände ermitteln zu können.

## Patentansprüche

1. Vorrichtung zur Bestimmung eines Abstandsprofils mit einem Lichtsender zur Aussendung pulsförmiger Lichtsignale (3) in Richtung eines Überwachungsraums, einer lichtsenderseitigen Lichtablenkvorrichtung, einem Lichtempfänger zum Empfang von aus dem Überwachungsraum reflektierten/remittierten Lichtsignalen und einer Auswerteeinheit (8) zur Ermittlung von Abstandswerten in Abhängigkeit von der Lichtlaufzeit zwischen Aussendung und Empfang der Lichtsignale (3), wobei der Lichtempfänger mehrere Photodioden (7) zum Empfang von von den Reflexions-/Remissionspunkten reflektierten/remittierten Lichtsignalen umfasst und der Lichtsender zur gleichzeitigen Aussendung mehrerer Lichtsignale (3) in Richtung mehrerer, im Überwachungsraum gelegener, voneinander beabstandeter Reflexions-/Remissionspunkte (5) ausgelegt ist,
**dadurch gekennzeichnet,**
**dass** der Lichtsender zur zeitversetzten Aussendung einzelner Einheiten von jeweils einigen Lichtsignalen (3) und zur gleichzeitigen Aussendung der einzelnen Lichtsignale (3) dieser Einheiten ausgelegt ist, und
**dass** die Lichtablenkvorrichtung zur Ablenkung eines fächerförmigen Lichtbündels (2) in einer Richtung senkrecht zur Ebene, in der sich das fächerförmige Lichtbündel (2) erstreckt, ausgelegt ist.

2. Vorrichtung nach Anspruch 1,
**dadurch gekennzeichnet ,**
**dass** die Auswerteeinheit (8) zur Berechnung von Abstandswerten in Abhängigkeit von der Lichtlaufzeit zwischen der Aussendung der mehreren Lichtsignale (3) und dem Empfang der Lichtsignale durch n Photodioden (7) ausgelegt ist, wobei jeder Abstandswert einer Photodiode (7) zugeordnet ist.

3. Vorrichtung nach einem der vorhergehenden Ansprüche,
**dadurch gekennzeichnet,**
**dass** die mehreren ausgesandten Lichtsignale (3) Bestandteil eines fächerförmigen Lichtbündels (2) sind.

4. Vorrichtung nach Anspruch 3,
**dadurch gekennzeichnet,**
**dass** sich das fächerförmige Lichtbündel (2) in einer Ebene erstreckt.

5. Vorrichtung nach einem der vorhergehenden Ansprüche,
**dadurch gekennzeichnet,**
**dass** der Lichtsender zur Projektion eines insbesondere geraden Lichtstriches (5) in den Überwachungsraum ausgelegt ist.

6. Vorrichtung nach einem der vorhergehenden Ansprüche,
**dadurch gekennzeichnet,**
**dass** der Lichtsender als Laserdiode ausgebildet ist.

7. Vorrichtung nach einem der vorhergehenden Ansprüche,
**dadurch gekennzeichnet,**
**dass** der Lichtempfänger als Photodiodenzeile ausgebildet ist.

8. Vorrichtung nach einem der vorhergehenden Ansprüche,
**dadurch gekennzeichnet,**
**dass** die Lichtablenkvorrichtung zur periodischen Ablenkung des fächerförmigen Lichtbündels (2) ausgelegt ist.

9. Vorrichtung nach einem der vorhergehenden Ansprüche,
**dadurch gekennzeichnet,**
**dass** der Lichtempfänger als zweidimensionales Photodiodenarray ausgebildet ist.

## Claims

1. An apparatus for the determination of a spatial separation profile using a light transmitter for the transmission of pulse-like light signals (3) in the direction of a monitored zone, having a light deflection device on the light transmitter side, a light receiver for the reception of light signals reflected/remitted from the monitored zone and an evaluation unit (8) for the determination of spatial separation values in dependence on the time of flight of light between transmission and reception of the light signals (3), wherein the light receiver includes a plurality of photodiodes (7) for the reception of light signals reflected/remitted from the reflection points/remission points and wherein the light transmitter is designed for the simultaneous transmission of a plurality of light signals (3) in the direction of a plurality of reflection points/remission points (5) disposed in the monitored zone and spaced apart from one another,
**characterised in that**
the light transmitter is designed for the time-offset transmission of individual units each consisting of a number of light signals (3) and
for the simultaneous transmission of the individual light signals (3) of these units; and
**in that** the light deflection device is designed for the deflection of a fan-shaped light beam (2) in a direction perpendicular to the plane in which the fan-shaped light beam (2) extends.

2. An apparatus in accordance with claim 1, **characterised in that** the evaluation unit (8) is designed for the calculation of spatial separation values in dependence on the time of flight of light between the transmission of the plurality of light signals (3) and the reception of the light signals by n photodiodes, with each spatial separation value being associated with a photodiode (7).

3. An apparatus in accordance with one of the preceding claims, **characterised in that** the plurality of transmitted light signals (3) are components of a fan-shaped light beam (2).

4. An apparatus in accordance with claim 3, **characterised in that** the fan-shaped light beam (2) extends in one plane.

5. An apparatus in accordance with any one of the preceding claims, **characterised in that** the light transmitter is designed for the projection of a streak of light (5), in particular a straight streak of light into the monitored zone.

6. An apparatus in accordance with any one of the preceding claims, **characterised in that** the light transmitter is made as a laser diode.

7. An apparatus in accordance with any one of the preceding claims, **characterised in that** the light receiver is made as a photodiode array.

8. An apparatus in accordance with any one of the preceding claims, **characterised in that** the light deflection device is designed for the periodic deflection of the fan-shaped light beam (2).

9. An apparatus in accordance with any one of the preceding claims, **characterised in that** the light receiver is made as a two-dimensional photodiode array.

## Revendications

1. Dispositif pour déterminer un profil de distance, comprenant un émetteur de lumière pour émettre des signaux lumineux en forme d'impulsions (3) en direction d'un espace de surveillance, un dispositif de déflexion de lumière, côté émetteur de lumière, un récepteur de lumière pour recevoir les signaux lumineux réfléchis/renvoyés depuis l'espace de surveillance, et une unité d'évaluation (8) pour déterminer les valeurs de distance en fonction du temps de parcours de la lumière entre l'émission et la réception des signaux lumineux (3), le récepteur de lumière comprenant plusieurs photodiodes (7) pour la réception de signaux lumineux réfléchis/renvoyés par des points de réflexion/renvoi, et l'émetteur de lumière est conçu pour émettre simultanément plusieurs signaux lumineux (3) en direction de plusieurs points de réflexion/renvoi (5) situés dans l'espace de surveillance et à distance les uns des autres,
**caractérisé en ce que**
l'émetteur de lumière est conçu pour émettre avec un décalage temporel des unités individuelles comprenant chacune quelques signaux lumineux (3) et pour émettre simultanément les signaux lumineux individuels (3) de ces unités, et
le dispositif de déflexion de lumière est conçu pour défléchir un faisceau de lumière en forme d'éventail (2) dans une direction perpendiculaire au plan dans lequel s'étend le faisceau lumineux en forme d'éventail (2).

2. Dispositif selon la revendication 1,
**caractérisé en ce que** l'unité d'évaluation (8) est conçue pour le calcul de valeurs de distance en fonction du temps de parcours de la lumière entre l'émission des plusieurs signaux lumineux (3) et la réception des signaux lumineux par n photodiodes (7), et chaque valeur de distance est associée à une photodiode (7).

3. Dispositif selon l'une des revendications précédentes,
**caractérisé en ce que** les plusieurs signaux lumineux émis (3) sont des éléments constitutifs d'un faisceau lumineux en forme d'éventail (2).

4. Dispositif selon la revendication 3,
**caractérisé en ce que** le faisceau lumineux en forme d'éventail (2) s'étend dans un plan.

5. Dispositif selon l'une des revendications précédentes,
**caractérisé en ce que** l'émetteur de lumière est conçu pour la projection d'un trait lumineux (5), en particulier rectiligne, dans l'espace de surveillance.

6. Dispositif selon l'une des revendications précédentes,
**caractérisé en ce que** l'émetteur de lumière est réalisé sous forme de diode laser.

7. Dispositif selon l'une des revendications précédentes,
**caractérisé en ce que** le récepteur de lumière est réalisé sous forme d'une ligne de photodiodes.

8. Dispositif selon l'une des revendications précédentes,
**caractérisé en ce que** le dispositif de déflexion de lumière est conçu pour défléchir périodiquement le faisceau lumineux en forme d'éventail (2).

9. Dispositif selon l'une des revendications précédentes,
**caractérisé en ce que** le récepteur de lumière est réalisé sous forme de réseau bidimensionnel de photodiodes.
